# EUROPEAN PATENT APPLICATION

(11) **EP 3 944 216 A1**
(43) Date of publication of application: **26.01.2022**
(21) Application number: 20808692.6
(22) Date of filing: 27.04.2020
(51) Int. Cl.: G08G 1/16, B60W 30/08, B60W 50/14, B60W 50/16, G08B 21/00, G08G 1/005

(54) **CONTROL DEVICE AND PRESENTATION SYSTEM**

(30) Priority: 17.05.2019 JP 2019093980; 06.04.2020 JP 2020068558
(71) Applicant: Kabushiki Kaisha Tokai Rika Denki Seisakusho, Aichi 480-0195 (JP)
(72) Inventor: MITSUI, Yuji, Niwa-gun, Aichi 480-0195 (JP); TAKAI, Toshihito, Niwa-gun, Aichi 480-0195 (JP); OHNISHI, Takeshi, Niwa-gun, Aichi 480-0195 (JP); SASAKI, Shinobu, Niwa-gun, Aichi 480-0195 (JP); IWATA, Kenji, Niwa-gun, Aichi 480-0195 (JP); TAKAGI, Yuka, Niwa-gun, Aichi 480-0195 (JP); HIROSE, Fumiaki, Niwa-gun, Aichi 480-0195 (JP); ONO, Yasuhiro, Niwa-gun, Aichi 480-0195 (JP); ARAYA, Takao, Niwa-gun, Aichi 480-0195 (JP); NOMURA, Keiji, Niwa-gun, Aichi 480-0195 (JP); NAKANE, Keita, Niwa-gun, Aichi 480-0195 (JP); SENGOKU, Takakazu, Niwa-gun, Aichi 480-0195 (JP); IMAI, Tomomi, Niwa-gun, Aichi 480-0195 (JP)
(74) Representative: TBK
(86) International application number: PCT/JP2020/017883
(87) International publication number: WO 2020/235305

(57) **Abstract**

A user is made immediately and continuously perceive a change of a predetermined situation.

There is provided a control device that includes: a control section configured to control information presentation of a presentation section configured to present information, and in which the control section changes a mode of the information presentation of the presentation section according to a predetermined fluctuation value that can fluctuate. Furthermore, there is provided a tactile presentation system presentation system that includes: a presentation section configured to perform information presentation for a user; and a control section configured to control the information presentation of the presentation section, and in which the control section changes a mode of the information presentation of the presentation section according to a predetermined fluctuation value that can fluctuate under control of the user.

## Description

### Technical Field

The present invention relates to a control device and a presentation system.

### Background Art

In recent years, various devices that present information to users have been developed. For example, Patent Literature 1 discloses a technology that gives a notification related to a driving behavior to a driver who drives a vehicle.

### Citation List

### Patent Literature

Patent Literature 1: JP 2018-22229A

### Summary of Invention

### Technical Problem

However, the technology disclosed in Patent Literature 1 only gives a notification of the driving behavior matching a situation at a specific timing, and there is a problem that it is difficult to make a user appropriately perceive a change of the situation.

Hence, the present invention has been made in light of the above problem, and an object of the present invention is to provide a new and improved control device and presentation system that can make a user appropriately perceive a change of a predetermined situation.

### Solution to Problem

To solve the above problem, a certain aspect of the present invention provides a control device that includes: a control section configured to control information presentation of a presentation section configured to present information, and in which the control section changes a mode of the information presentation of the presentation section according to a predetermined fluctuation value that can fluctuate.

Furthermore, the predetermined fluctuation value may include a relative physical quantity with respect to a target, and the control section may change the mode of the information presentation of the presentation section according to the relative physical quantity.

Furthermore, the relative physical quantity may include a distance.

Furthermore, the relative physical quantity may include a speed.

Furthermore, the predetermined fluctuation value may include a level of a warning for a user, and the control section may change the mode of the information presentation of the presentation section according to the level of the warning.

Furthermore, the predetermined fluctuation amount value may include a divergence degree between a predetermined route and a user's traveling direction, and the control section may change the mode of the information presentation of the presentation section according to the divergence degree.

Furthermore, to solve the above problem, another aspect of the present invention provides a tactile presentation system presentation system that includes: a presentation section configured to perform information presentation for a user; and a control section configured to control the information presentation of the presentation section, and in which the control section changes a mode of the information presentation of the presentation section according to a predetermined fluctuation value that can fluctuate under control of the user.

### Advantageous Effects of Invention

As described above, according to the present invention, it is possible to make a user appropriately perceive a change of a predetermined situation.

### Brief Description of Drawings

[FIG. 1] FIG. 1 is a block diagram illustrating a configuration example of a presentation system according to an embodiment of the present disclosure.
[FIG. 2] FIG. 2 is a diagram illustrating an example of a case where a predetermined fluctuation value is a relative physical quantity with respect to another object according to the embodiment.
[FIG. 3] FIG. 3 is a diagram illustrating an example of a case where a predetermined fluctuation value is a relative physical quantity with respect to another object according to the embodiment.
[FIG. 4] FIG. 4 is a diagram illustrating an example of a case where a predetermined fluctuation value is a relative physical quantity with respect to a predetermined spot according to the embodiment.
[FIG. 5] FIG. 5 is a diagram illustrating an example of tactile presentation control in a case where a user has a visual impairment according to the embodiment.

### Description of Embodiments

A preferred embodiment of the present invention will be described in detail below with reference to the accompanying drawings. In addition, overlapping description of components having substantially same functional configurations in this description and the drawings will be omitted by assigning identical reference numerals to the components.

### <1. Embodiment

### «1.1. Outline»

First, the outline of the present disclosure will be described. As described above, in recent years, various devices that present information to users have been developed. The above devices include, for example, a safety driving behavior notification system disclosed in Patent Literature 1.

However, the system disclosed in Patent Literature 1 only gives a notification of a driving behavior matching a situation at a specific timing, and has difficulty in making a user appropriately perceive a change of the situation in some cases.

In a specific example, the above system gives a notification using a voice or a text such as "please watch out for rush out". However, a situation is also assumed that a probability that rush out occurs has already been reduced at a timing at which the user has grasped notification contents.

As in the above example, a driving situation changes from time to time. Therefore, it is probable that there is a divergence between a situation that triggers a notification and a current situation at a point of time at which the user grasps the above notification contents, and cases are also assumed where a notification effect diminishes or a meaning of the notification is lost.

A technical idea according to the embodiment of the present disclosure has been conceived focusing on the above point, and makes it possible to make the user appropriately perceive a change of a predetermined situation.

A control device 20 according to the embodiment of the present disclosure includes a control section 210 that controls information presentation of a presentation section 310. Furthermore, one of features of the control section 210 according to the embodiment of the present disclosure is to change an information presentation mode of the presentation section 310 according to a predetermined fluctuation value that can fluctuate.

Configurations of the control device 20 and a presentation system 1 having the above features will be described below.

### «1.2. Configuration Example»

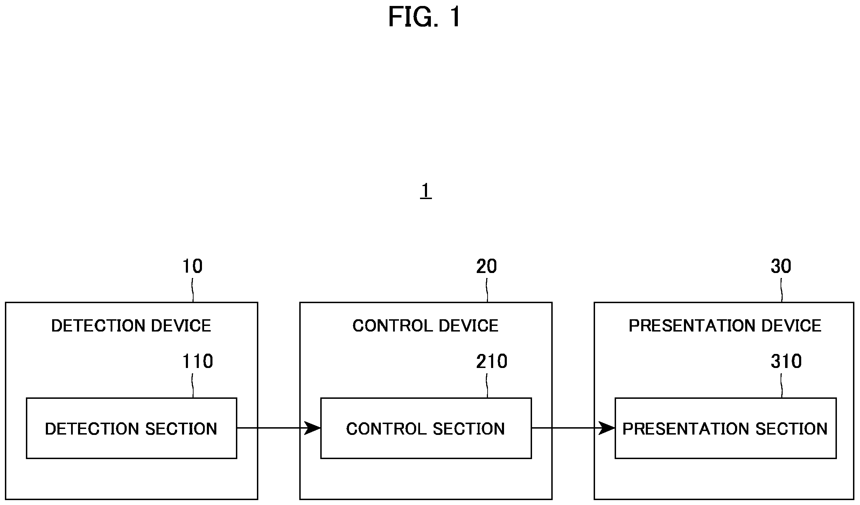

FIG. 1 is a block diagram illustrating a configuration example of the presentation system 1 according to the present embodiment. As illustrated in FIG. 1, the presentation system 1 according to the present embodiment includes, for example, a detection device 10, a control device 20, and a presentation device 30.

### (Detection Device 10)

The detection device 10 according to the present embodiment includes a detection section 110 that detects various physical quantities that are necessary to calculate a predetermined fluctuation value. The various physical quantities include a user state index that indicates a user's state, a device state index that indicates a state of a device that the user directly or indirectly uses, or other object state indices that indicate various states related to other objects that are present in user's surroundings. In addition, the above device that the user of the user directly or indirectly uses includes, for example, the presentation system 1 according to the present embodiment.

User state information that indicates the above user state index includes a vital sign such as a user's heartbeat or breathing. To detect this vital sign, the detection section 110 may include, for example, various devices such as electrocardiographic sensors that support the vital sign to be detected.

Furthermore, device state information that indicates the above device state index includes an acceleration, an angular velocity, a yaw rate, a magnetic force, an image that indicates a situation in surroundings of the device, a distance between a target device and another object, a current position of the target device, and other pieces of information.

To detect this device state information, the detection section 110 according to the present embodiment includes an acceleration sensor, a gyro sensor, a geomagnetic sensor, an imaging sensor, an optical sensor such as an infrared sensor, a sonar, and a microphone. Furthermore, the detection section 110 may include various communication devices that perform information communication with other equipment, and a GNSS (Global Navigation Satellite System) signal reception device.

The other object state index includes user state information or device state information whose subject is another object. To obtain the other object state index, the detection section 110 may include a communication section that communicates information to and from the another object.

### (Control Device 20)

The control device 20 according to the present embodiment includes the control section 210 that controls information presentation of the presentation section 310 describe below. One of features of the control section 210 according to the present embodiment is to change an information presentation mode of the presentation section 310 according to a predetermined fluctuation value that can fluctuate.

In this regard, the above predetermined fluctuation value may be, for example, a relative physical quantity with respect to the target. The above relative physical quantity may be a relative value of each of the user state index, the device state index, and the other object state indices. More specifically, the above relative physical quantity may be a relative speed or a relative distance with respect to a target.

In this regard, the target described herein is the above-described another object. The control section 210 according to the present embodiment may change the information presentation mode of the presentation section 310 according to, for example, the relative speed or distance between a non-target object (such as a vehicle driven by the user) and the another object (such as another vehicle that runs in the surroundings) that is the target.

In addition, the target according to the present embodiment may be a predetermined geography or spot such as the above another object. A specific example of the control of the control section 210 according to the present embodiment will be separately described.

A function of the control section 210 according to the present embodiment can be realized by collaboration of, for example, a processor such as a CPU (Central Processing Unit) or an MCU (Micro Controller Unit), software, and a storage medium such as an ROM (Read Only Memory) or an RAM (Random Access Memory).

### (Presentation Device 30)

The presentation device 30 according to the present embodiment includes the presentation section 310 that performs information presentation for the user based on control of the control section 210. The presentation section 310 according to the present embodiment presents various pieces of information in a mode that enables the user to perceive the various pieces of information via five senses (a sense of vision, a sense of hearing, a sense of touch, a sense of smell, and a sense of taste) based on control of the control section 210.

The presentation section 310 according to the present embodiment may present, for example, information via a user's sense of touch (tactile presentation). The above tactile presentation includes, for example, presentation by way of vibration in the first place, and various presentations that the user can sense via the sense of touch. The various presentations described herein include presentation via a sense of pain and presentation via a sense of temperature.

Hence, the presentation section 310 according to the present embodiment includes various mechanisms that support types of senses of touch to be presented.

When, for example, performing presentation by way of vibration, the presentation section 310 according to the present embodiment may include an eccentric motor (ERM: Eccentric Rotating Mass), a linear vibrator (LRA: Linear Resonant Actuator), or a piezoelectric element.

Presentation of information via the sense of vision (visual presentation below), presentation of information via the sense of smell (olfactory presentation below), presentation of information via the sense of taste (gustatory presentation below), or presentation of information via the sense of hearing (auditory presentation below) may be realized as follows.

A visual presentation element for visual presentation is, for example, a configuration that includes a lighting function, or a configuration such as a dimming glass that can change a light transmittance. An olfactory presentation element for olfactory presentation is a configuration that spreads a perfume into air. A gustatory presentation element for gustatory presentation is a configuration that adjusts a taste of a stuff to be put in an oral cavity, or a configuration that adjusts a taste of a stuff that has been put in an oral cavity. An auditory presentation element for auditory presentation is a configuration such as a speaker or an earphone that causes air vibration, or a configuration that has a bone conduction function.

In addition, changing the information presentation mode may be changing a presentation strength of a presentation method of an identical type, or changing a presentation method to a presentation method of a different type. Furthermore, changing the presentation strength may be, for example, changing a presentation strength (size) by way of vibration, or changing a presentation time length by way of vibration in a case of vibration presentation. When presentation by way of cyclic vibration is repeated, the cycle may be changed. Changing the presentation strength may be, for example, changing a light quantity, or changing another quantity in a case of visual presentation. Furthermore, in a case of, for example, auditory presentation, the presentation strength (size) may be changed, or the presentation time length may be changed. When cyclic presentation via the sense of hearing is repeated, the cycle may be changed. Furthermore, in a case of, for example, gustatory presentation, the amount of a stuff to be put in the oral cavity may be changed. Furthermore, in a case of, for example, olfactory presentation, the amount of a perfume to be spread into air may be changed.

The configuration example of the presentation system 1 according to the present embodiment has been described above. In addition, the above configuration described with reference to FIG. 1 is only an example, and the configuration of the presentation system 1 according to the present embodiment is not limited to the example. For example, a case where the presentation system 1 includes three independent devices has been described above. However, the detection section 110, the control section 210, and the presentation section 310 according to the present embodiment may be provided in, for example, a single device (such as a smartphone or a wearable terminal). The configuration of the presentation system 1 according to the present embodiment is flexibly modifiable according to a specification or an operation.

### «1.3. Application Example»

Next, the application example of the presentation system 1 according to the present embodiment will be specifically described. A case where the presentation system 1 according to the present embodiment is mounted on a movable body such as a vehicle that the user gets on, and changes the information presentation mode of the presentation section 310 according to a predetermined fluctuation value that can fluctuate will be described below as an example below.

As described above, the above predetermined fluctuation value may include a relative physical quantity with respect to a target. The control section 210 according to the present embodiment may change the information presentation mode of the presentation section 310 according to the above relative physical quantity. In addition, the above relative physical quantity may be, for example, a speed or a distance.

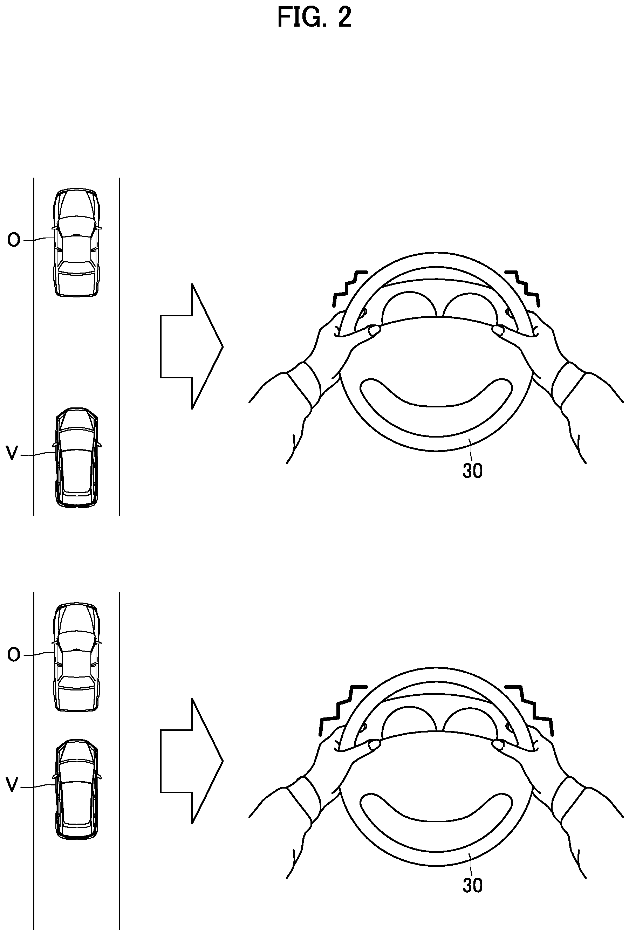

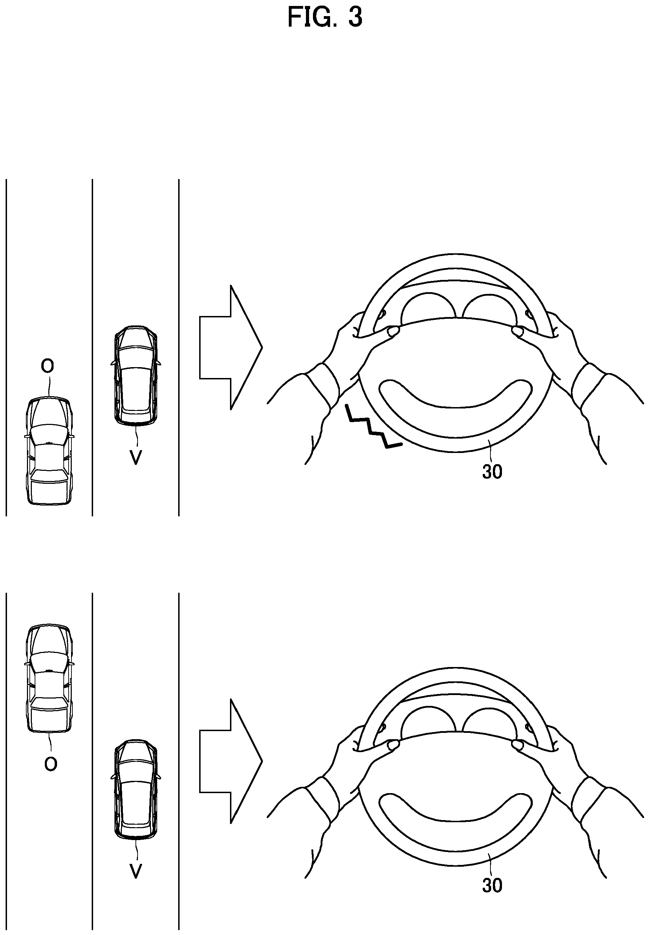

FIGs. 2 and 3 are diagrams illustrating examples of cases where the predetermined fluctuation value according to the present embodiment is a relative physical quantity with respect to another object.

For example, an upper left side and a lower left side in FIG. 3 illustrate a movable body V driven by the user, and a target O that is the another object that runs in front of the movable body V. In this case, the control section 210 according to the present embodiment may change the information presentation mode of the presentation section 310 according to a relative physical quantity of the non-target object and the target O, i.e., the relative physical quantity of the user, the movable body V driven by the user, or a specific part of the movable body V, and the target O.

The above relative physical quantity includes, for example, a distance between the non-target object and the target O. A case where the non-target object is the movable body V driven by the user will be described as an example below. In a case of the example illustrated in FIG. 2, the distance between the movable body V and the target O in the upper part is longer than the distance between the movable body V and the target O in the lower part. Thus, the distance between the movable body V and the target O may be paraphrased as a fluctuation value that can fluctuate by user's accelerator control or brake control of the movable body V.

In this case, the control section 210 according to the present embodiment may change the information presentation mode of the presentation section 310 according to the distance between the movable body V and the target O. For example, the control section 210 may perform control to decrease the vibration presentation strength of the presentation device 30 realized as a steering as the distance between the movable body V and the target O becomes longer as illustrated on the upper right side of FIG. 2. On the other hand, the control section 210 may perform control to increase the vibration presentation strength of the presentation device 30 as the distance between the movable body V and the target O becomes shorter as illustrated on the lower right side of FIG. 2.

To the contrary, the control section 210 may control the presentation section 310 to increase the vibration presentation strength as the distance between the movable body V and the target O becomes longer, and decrease the vibration presentation strength as the distance becomes shorter. In addition, in a case of vibration presentation, the presentation strength may be calculated based on, for example, an acceleration, a frequency, a presentation time, or a presentation interval.

Furthermore, the control section 210 may control information presentation via the sense of hearing or the sense of vision in addition to the sense of touch like vibration. For example, the control section 210 may control, for example, a volume of a voice output from the presentation section 310, or control a size of a text displayed on the presentation section 310 according to the distance between the movable body V and the target O. Furthermore, the control section 210 can also perform control by combining information presentations via above different senses.

A case is also assumed where some users that drive movable bodies unintentionally shorten inter-vehicle distances to movable bodies that run in front. However, according to the above control of the control section 210 according to the present embodiment, the user can appropriately perceive a change of an inter-vehicle distance, and perform acceleration control or brake control matching a situation.

In addition, the inter-vehicle distance between the movable body V driven by the user and the target O that runs in front of the movable body V is defined as the distance between the movable body V and the target O above. However, the inter-vehicle distance can be also regarded as a relative speed of the movable body V and the target O. In a situation that, for example, the inter-vehicle distance between the movable body V and the target O becomes short, the speed of the movable body V is faster than the speed of the target O. Thus, the relative physical quantity according to the above-described present embodiment may include the speed.

Furthermore, controlling the information presentation mode according to the above inter-vehicle distance is synonymous with controlling a strength of a warning for the user. Hence, it can be said that the predetermined fluctuation value according to the above-described present embodiment includes a level of the warning for the user. In this case, the control section 210 according to the present embodiment may change the information presentation mode of the presentation section 310 according to the level of the warning.

For example, the control section 210 may perform control to increase the information presentation strength of the presentation section 310 as the inter-vehicle distance between the movable body V and the target O becomes shorter, that is, the level of the warning for the user increases, and perform control to decrease the information presentation strength as the level of the warning decreases. On the contrary, the control section 210 may perform control to decrease the information presentation strength of the presentation section 319 as the level of the warning for the user increases, and perform control to increase the information presentation strength as the level of the warning decreases.

In addition, the control section 210 according to the present embodiment may change the information presentation mode of the presentation section 310 according to various fluctuation values in addition to the above inter-vehicle distance.

For example, the upper left side and the lower left side of FIG. 3 illustrate situations that the user changes a lane of the movable body V to the left side. In this regard, in the example illustrated on the upper left side of FIG. 3, the target O is present on a rear left side of the movable body V corresponding to a blind spot of the user.

When the target O is present at the blind spot of the user as described above, the control section 210 according to the present embodiment may change the information presentation mode of the presentation section 310 according to the relative physical quantity of the movable body V and the target O, or the level of the warning for the user.

For example, as the distance between the movable body V and the target O becomes shorter or as the speed of the target O that approaches the movable body V from behind becomes faster, the control section 210 may set a higher level of the warning for the user, and perform control to increase the vibration presentation strength of the presentation device 30 as illustrated on the right upper part of FIG. 3.

On the other hand, as the distance between the movable body V and the target O becomes longer or as the speed of the target O that approaches the movable body V from behind becomes slower, the control section 210 may set a lower level of the warning for the user, and perform control to decrease the vibration presentation strength of the presentation device 30.

Furthermore, in this case, the control section 210 according to the present embodiment may cause the presentation section 310 arranged at a position corresponding to a direction in which the target O is located to present vibration on the presentation device 30 as illustrated in the right upper part of FIG. 3. According to this control, the user can intuitively perceive the position of the target O that is present at the blind spot via a sense of touch.

On the other hand, when the target O moves ahead of the movable body V and is able to safely change the lane as illustrated on the left side of FIG. 3, the control section 210 may stop tactile presentation of the presentation section 310.

According to the above control of the control section 210 according to the present embodiment, the user can appropriately perceive the presence of the target O that is present at the blind spot, and perform appropriate control matching a situation.

In addition, the control section 210 may perform control such that the information presentation strength matching an increase/decrease of the fluctuation value is reverse to the above. Furthermore, the control section 210 may control information presentation via the sense of hearing or the sense of vision instead of the sense of touch such as vibration or instead of the sense of touch.

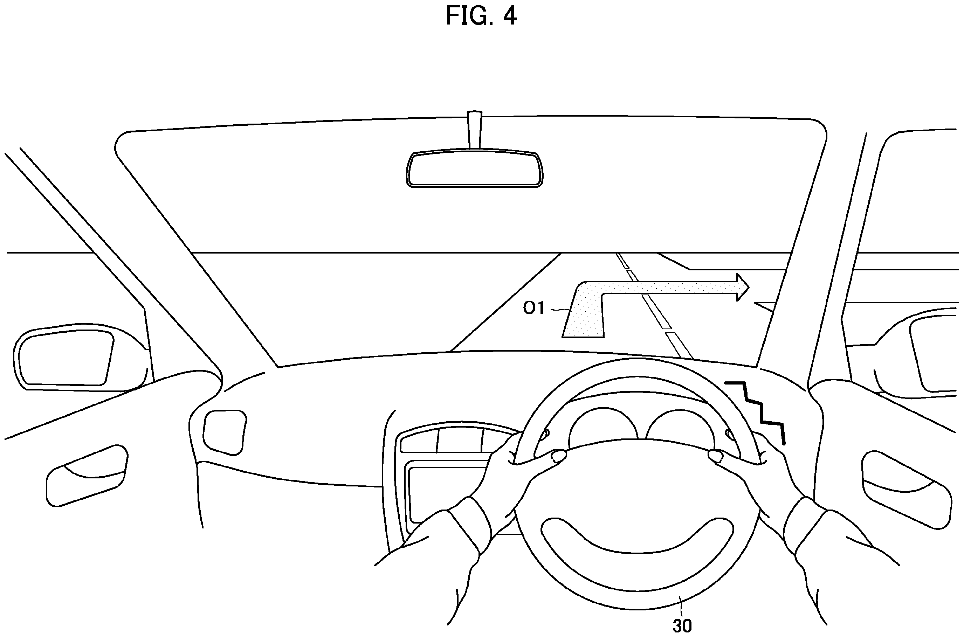

Furthermore, the case where the target is the moving body has been described as the example above. However, the target according to the present embodiment is not limited to this example, and may be a predetermined static object, geography, or spot. FIG. 4 is a diagram illustrating an example of a case where the predetermined fluctuation value according to the present embodiment is a relative physical quantity with respect to a predetermined spot.

FIG. 4 illustrates a situation that, when the user takes a route guidance to a destination by using a navigation system, the user needs to turn right at a three-way junction in front. In such a situation, when, for example, there are a plurality of roads at which the user can turn right, or when the user has difficulty in visually checking a spot at which the user needs to turn right, there is a probability that the user goes on a wrong route.

To avoid the above situation, the control section 210 according to the present embodiment may set as a target a spot at which the user needs to turn right or left, and change the information presentation mode of the presentation section 310 according to a relative physical quantity of a target and a non-target object.

In a case of, for example, the example illustrated in FIG. 4, the control section 210 sets as a target the three-way junction in front at which the user needs to turn right, and performs control to increase the vibration presentation strength of the presentation device 30 realized as the steering as a distance between the target and the non-target object (such as the user, the movable body driven by the user, or a specific part of the movable body) becomes shorter.

In addition, in this case, when the user operates a turn switch at an appropriate spot, the control section 210 may stop tactile presentation of the presentation device 30. On the other hand, when the turn switch is operated before the appropriate spot, there is a probability that the user travels toward a wrong road, and therefore the control section 210 may cause the presentation device 30 to continue tactile presentation.

Furthermore, the control section 210 according to the present embodiment may perform control to cause the presentation section 310 to, for example, superimpose and display an object O1 that indicates a traveling direction together as illustrated in FIG. 4. In this case, the control section 210 may control the presentation section 310 to display the object O1 larger as the user gets closer to the three-way junction. Furthermore, the control section 210 may control the presentation section 310 to make a voice that instructs to turn right louder as the user gets closer to the three-way junction.

According to the above control of the control section 210 according to the present embodiment, the user can appropriately perceive a spot at which the user changes the direction, and effectively increase a probability that the user goes on a right route.

In addition, the control section 210 may control not only the above route guidance, but also the presentation mode of various pieces of information related to, for example, user's surroundings. For example, the control section 210 can cause the presentation section 310 to present information of facilities that are detected by the detection section 110 and are present in the user's surroundings. In this case, the control section 210 may control an information presentation target of the presentation section 310 according to a change of a relative physical quantity with respect to a non-target object such as the user targeting at the above facility (or a spot at which the facility locates).

In a specific example, the control section 210 may cause the presentation section 310 to superimpose and display the information of the facility that is present in the surroundings of the vehicle driven by the user by using an AR technology, and perform control to make a display size larger as the distance between the target and the non-target object becomes closer.

Furthermore, in this case, the control section 210 may control the voice or tactile presentation mode of the presentation section 310 in addition to the above display control. As, for example, the distance between the target corresponding to information to be displayed, and the non-target object becomes shorter, the control section 210 may increase the voice or tactile presentation strength of the presentation section 310.

The specific example of information presentation control in a case where the user drives the movable body has been described above. In addition, the target that the user controls is not limited to the above-described vehicle, and may be, for example, a device such as a drone that can be remotely controlled.

Even in this case, according to the relative physical quantity (the speed or the distance) of the device (non-target object) and an obstacle (target) or the level of the warning, the control section 210 can control the information presentation mode of the presentation section 310, and notify the user of a change of a situation via the five senses. According to this control, it is possible to perform appropriate control even in a situation that it is not possible to sufficiently visually check the device (non-target object) operated by the user. In addition, in this case, the presentation device 30 may be realized as, for example, a remote controller operated by the user.

Furthermore, an object controlled by the user may be the user itself. It can be said that, when, for example, the user perceives the presence of, for example, an obstacle and takes an avoidance behavior, the user controls a user's behavior.

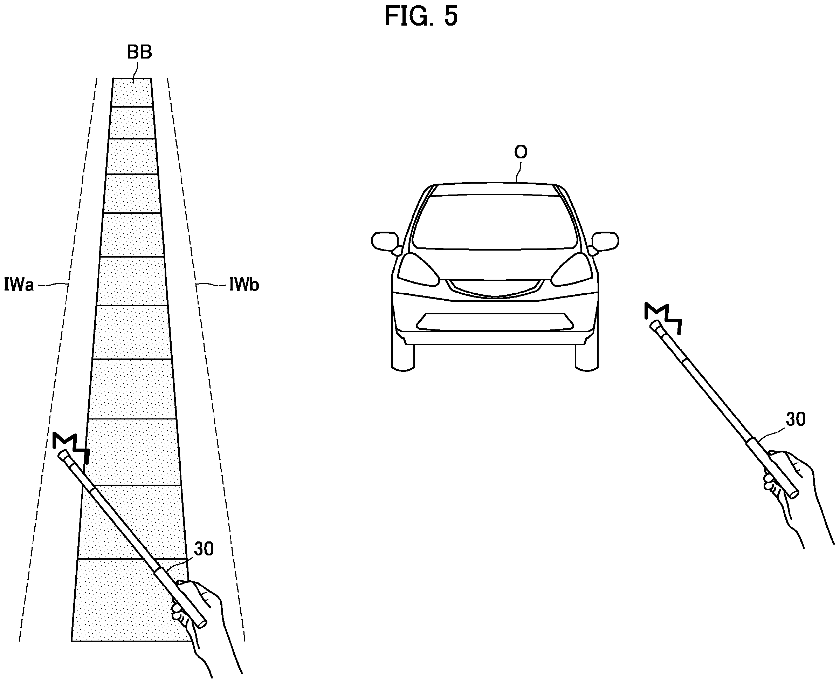

FIG. 5 is a diagram illustrating an example of control of the information presentation mode in a case where the user has a visual impairment according to the present embodiment. For example, the left side of FIG. 5 illustrates an example of a case where the presentation device 30 that includes the detection section 110, the control section 210, and the presentation section 310 is realized as a white stick, and a user walks along a Braille block BB using the white stick.

In this case, as illustrated in FIG. 5, for example, the control section 210 according to the present embodiment sets virtual walls IWa and IWb on both sides that are a predetermined distance apart from the Braille block BB detected by the detection section 110, and causes the presentation section 310 to present vibration corresponding to a distance between the virtual walls IWa and IWb (targets) and a distal end (non-target object) of the white stick.

More specifically, the control section 210 may control the presentation section 310 to increase the vibration presentation strength as the distal end of the white stick gets closer to the virtual wall IWa or IWb, and cause the presentation section 310 to present vibration that makes the user realize that the white stick contacts the wall when the distal end of the white stick contacts the virtual wall IWa or IWb.

According to the above control of the control section 210 according to the present embodiment, by perceiving a sense of contact with the wall, the user can grasp that a user's traveling direction deviates from the Braille block BB that is the route the user needs to travel, and walk along the right route with help of the virtual walls IWa and IWb.

In addition, the control section 210 according to the present embodiment may control the voice presentation mode of the presentation section 310 in addition to or instead of the above control of the vibration presentation mode of the presentation section 310. In this case, as the distal end of the white stick gets closer to the virtual wall IWa or IWb, the control section 210 may control the presentation section 310 to increase the voice presentation strength, or may control the presentation section 310 to present the voice presentation strength to the contrary.

In addition, navigation by way of the above information presentation that uses the virtual walls IWa and IWb is applicable to a route that does not include the Braille block BB, too. The control section 210 may set the virtual walls IWa and IWb along a predetermined route to a destination indicated by the user, and control the above tactile presentation. Thus, a predetermined fluctuation value according to the present embodiment may include a divergence degree between a predetermined route and a user's traveling direction. The control section 210 according to the present embodiment can change the information presentation mode of the presentation section 310 according to the above divergence degree.

Furthermore, the control section 210 according to the present embodiment can control the information presentation mode of the presentation section 310 based on, for example, distances to various targets in addition to the above divergence degree.

For example, FIG. 5 illustrates a situation that the movable body stops on the left side of the traveling direction of the user who uses the presentation device 30 realized as the white stick. In this case, the control section 210 sets the above movable body as the target O, and changes the information presentation mode of the presentation section 310 according to the distance between the target O and the distal end (non-target object) of the white stick.

In a specific example, as the distance between the target O and the distal end of the white stick becomes closer, the control section 210 according to the present embodiment may increase the vibration or voice presentation strength of the presentation section 310.

According to the above control of the control section 210 according to the present embodiment, even when the user cannot visually check the target O, it is possible to perceive the presence of the target O before the distal end of the white stick actually hits the target O, and take an appropriate avoidance behavior.

The function of the presentation system 1 according to the present embodiment has been described in detail above. In addition, the case where the control section 210 controls the information presentation mode of the presentation section 310 according to, for example, a distance to a target has been described above as the main example. However, information presentation target control according to the present embodiment is not limited to this example.

Even when targets such as other objects or spots are not present, the control section 210 according to the present embodiment may control the information presentation mode of the presentation section 310 based on the fluctuation value related to a user's state. When, for example, the user drives the movable body, as a speed of the user (the movable body driven by the user) detected by the detection section 110 becomes closer to a predetermined value such as a legal speed limit, the control section 210 may perform control to increase the information presentation strength of the presentation section 310.

Furthermore, when, for example, the user controls the user during, for example, an exercise, as a vital sign such as a heart rate or the degree of wakening of the user detected by the detection section 110 becomes closer to a predetermined value, the control section 210 may increase the information presentation strength of the presentation section 310. Thus, the predetermined fluctuation value according to the present embodiment includes various values that relate to, for example, the user and a device used by the user, and can fluctuate.

Furthermore, when causing the presentation section 310 to present different types of a plurality of pieces of information, the control section 210 may vary the presentation mode per information type. For example, a case will be assumed where the presentation section 310 is caused to execute the above-described presentation of information related to a user's vital sign and presentation of information related to a distance to a vehicle in front. In this regard, when wanting to cause the presentation section 310 to present both of the pieces of information in the same presentation mode, the user has difficulty in deciding which information the perceived sense corresponds to.

Hence, the control section 210 according to the present embodiment may vary the presentation mode of the presentation section 310 according to information that needs to be presented to the user. In the case of the above example, for example, the control section 210 may cause the presentation section 310 to present the information related to the vital sign by way of vibration, and cause the presentation section 310 to present the information related to the distance to the vehicle in front by way of a voice.

Furthermore, for example, the control section 210 may cause the presentation section 310 to present the information related to the vital sign and the information related to the distance to the vehicle in front by way of vibrations including respectively different positions, accelerations, and presentation intervals.

According to the above control, even when there are a plurality of pieces of information that need to be presented to the user, the user can appropriately perceive each information separately.

### <2. Conclusion>

As described above, the control device 20 according to the embodiment of the present disclosure includes the control section 210 that controls information presentation of the presentation section 310. Furthermore, one of features of the control section 210 according to the embodiment of the present disclosure is to change the information presentation mode of the presentation section 310 according to a predetermined fluctuation value that can fluctuate. According to this configuration, it is possible to make the user appropriately perceive a change of a predetermined situation.

The preferred embodiment of the present invention has been described in detail above with reference to the accompanying drawings. However, the present invention is not limited to this example. It is obvious that one who has common knowledge in the technical field to which the present invention belongs can arrive at various change examples and alteration examples within the scope of the technical idea recited in the claims, it should be understood that these change examples and alteration examples naturally belong to the technical idea of the present invention.

For example, the above embodiment has described the example where the presentation system 1 is mounted on the movable body. However, the present invention is not limited to this example. For example, the presentation system 1 may be mounted on a wearable device attached to the user. In an example, when the user is equipped with the wearable device and gets on a motorcycle that is the movable body, the presentation system 1 can present information for navigation.

### (1) Other Application Examples of Change of Information Presentation Mode According to Distance

As described in the above embodiment, the presentation system 1 can change the information presentation mode according to a relative distance with respect to a target. The application example of this technology is not limited to the example described in the above embodiment. Other application examples will be described below.

In an example, the target may be an intersection to turn. In this case, the control section 210 may change the information presentation mode of the presentation section 310 according to a relative distance with respect to the intersection that is the target. For example, the control section 210 may weaken the vibration presentation strength as the relative distance becomes longer. On the other hand, the control section 210 may strengthen the vibration presentation strength as the relative distance becomes shorter.

In another example, the target may be a destination such as a shop. In this case, the control section 210 changes the information presentation mode of the presentation section 310 according to a relative distance with respect to the destination that is the target. For example, the control section 210 may weaken the vibration presentation strength as the relative distance becomes longer. On the other hand, the control section 210 may strengthen the vibration presentation strength as the relative distance becomes shorter.

In another example, the target may be a specific signpost that requires particular attention among signposts arranged on roadsides. In this case, the control section 210 changes the information presentation mode of the presentation section 310 according to a relative distance with respect to the specific signpost that is the target. For example, the control section 210 may weaken the vibration presentation strength as the relative distance becomes longer. On the other hand, the control section 210 may strengthen the vibration presentation strength as the relative distance becomes shorter.

In another example, the target may be a departure spot or a destination spot of a running course. In this case, the control section 210 may change the information presentation mode of the presentation section 310 according to a relative distance with respect to the departure spot or the destination spot that is the target. In addition, the relative distance with respect to the departure spot means a distance that has been already travelled. For example, the control section 210 may weaken the vibration presentation strength as the relative distance with respect to the departure spot becomes shorter. On the other hand, the control section 210 may strengthen the vibration presentation strength as the relative distance with respect to the departure spot becomes longer. Furthermore, the relative distance with respect to the target spot means a distance that is scheduled to travel from now. For example, the control section 210 may weaken the vibration presentation strength as the relative distance with respect to the target spot becomes longer. On the other hand, the control section 210 may strengthen the vibration presentation strength as the relative distance with respect to the target spot becomes shorter. In addition, the control section 210 may present a target time together while performing this control.

### (2) Other Application Examples of Change of Information Presentation Mode According to Level of Warning

As described in the above embodiment, the presentation system 1 can change the information presentation mode according to the level of the warning. The application example of this technology is not limited to the technology described in the above embodiment. Other application examples will be described below.

### -Level of Warning Related to Distance

The level of the warning may relate to a distance.

In an example, the presentation system 1 may change the information presentation mode according to the level of the warning related to a distance between a vehicle driven by the user and a child. As the distance between the vehicle driven by the user and the child becomes shorter, the child is more likely to be endangered, and therefore the level of the warning increases. Hence, the control section 210 may perform control to increase the information presentation strength of the presentation section 310 as the distance between the vehicle driven by the user and the child becomes shorter, that is, as the level of the warning for the user increases. On the other hand, the control section 210 may perform control to decrease the information presentation strength of the presentation section 310 as the distance between the vehicle driven by the user and the child becomes longer, that is, as the level of the warning for the user decreases.

In another example, when the user takes a child to a shopping mall, the presentation system 1 may change the information presentation mode according to the level of the warning related to the distance between the user and the child. As the distance between the user and the child becomes longer, the child is more likely to get lost, and therefore the level of the warning increases. Hence, the control section 210 may perform control to increase the information presentation strength of the presentation section 310 as the distance between the user and the child becomes longer, that is, as the level of the warning for the user increases. On the other hand, the control section 210 may perform control to decrease the information presentation strength of the presentation section 310 as the distance between the user and the child becomes shorter, that is, as the level of the warning for the user decreases.

In another example, when the user who is a tour guide conducts a tour with tourists, the presentation system 1 may change the information presentation mode according to the level of the warning related to a distance between the user and the tourists. As the distance between the user and the tourists becomes longer, the tourists are more likely to get astray, and therefore the level of the warning increases. Hence, the control section 210 may perform control to increase the information presentation strength of the presentation section 310 as the distance between the user and the tourists becomes longer, that is, as the level of the warning for the user increases. On the other hand, the control section 210 may perform control to decrease the information presentation strength of the presentation section 310 as the distance between the user and the tourists becomes shorter, that is, as the level of the warning for the user decreases.

In another example, when the user is walking near a cliff, the presentation system 1 may change the information presentation mode according to the level of the warning related to the distance between the user and the cliff. As the distance between the user and the cliff becomes shorter, the user is more likely to be endangered, and therefore the level of the warning increases. Hence, the control section 210 may perform control to increase the information presentation strength of the presentation section 310 as the distance between the user and the cliff becomes shorter, that is, as the level of the warning for the user increases. On the other hand, the control section 210 may perform control to decrease the information presentation strength of the presentation section 310 as the distance between the user and the cliff becomes longer, that is, as the level of the warning for the user decreases.

### -Level of Warning Related to Speed

The level of the warning may relate to a speed. In an example, the presentation system 1 may change the information presentation mode according to the level of the warning related to a speed of a vehicle driven by the user. As a divergence between the speed of the vehicle driven by the user and a legal speed becomes greater, an accident due to, for example, contact between the vehicle driven by the user and another vehicle that runs while keeping the legal speed is more likely to occur, and therefore the level of the warning increases. Hence, the control section 210 may perform control to increase the information presentation strength of the presentation section 310 as the divergence between the speed of the vehicle driven by the user and the legal speed becomes greater, that is, as the level of the warning for the user increases. On the other hand, the control section 210 may perform control to decrease the information presentation strength of the presentation section 310 as the divergence between the speed of the vehicle driven by the user and the legal speed becomes smaller, that is, as the level of the warning for the user decreases.

### -Level of Warning Related to Coordinate

The level of the warning may relate to a coordinate.

### -Level of Warning Related to Position

The level of the warning may relate to a position.

In an example, when the user climbs a mountain, the presentation system 1 may change the information presentation mode according to the level of the warning related to an elevation of a user's current position. As the elevation becomes higher, altitude sickness is more likely to happen, and therefore the level of the warning increases. Hence, the control section 210 may control the presentation section 310 to present information when the elevation of the user's current position exceeds an elevation (e.g., 1000 meters) that requires attention. Furthermore, the control section 210 may perform control to increase the information presentation strength of the presentation section 310 as the elevation of the user's current position becomes higher, that is, as the level of the warning for the user increases. On the other hand, the control section 210 may perform control to decrease the information presentation strength of the presentation section 310 as the elevation of the user's current position becomes lower, that is, as the level of the warning for the user decreases.

In another example, when the user does scuba diving, the presentation system 1 may change the information presentation mode according to the level of the warning related to a water depth of a user's current position. As the water depth becomes deeper, decompression sickness is more likely to happen, and therefore the level of the warning increases. Hence, the control section 210 may control the presentation section 310 to present information when the water depth of the user's current position exceeds a water depth (e.g., 100 meters) that requires attention. Furthermore, the control section 210 may perform control to increase the information presentation strength of the presentation section 310 as the water depth of the user's current position becomes deeper, that is, as the level of the warning for the user increases. On the other hand, the control section 210 may perform control to decrease the information presentation strength of the presentation section 310 as the water depth of the user's current position becomes shallower, that is, as the level of the warning for the user decreases.

In another example, the presentation system 1 may change the information presentation mode according to the level of the warning related to a guidance state of the user who is the guidance target. As a current position of the user who is the guidance target becomes farther from a destination of a guidance destination and/or as a user's traveling direction becomes farther from a direction of the destination of the guidance destination, the user is more likely to not be guided to the destination, and therefore the level of the warning increases. Hence, the control section 210 may perform control to increase the information presentation strength of the presentation section 310 as the user's current position becomes farther from the destination of the guidance destination and/or as the user's traveling direction becomes farther from the direction of the destination of the guidance destination, that is, as the level of the warning for the user increases. On the other hand, the control section 210 may perform control to decrease the information presentation strength of the presentation section 310 as the user's current position becomes farther from the destination of the guidance destination and/or as the user's traveling direction becomes farther from the direction of the destination of the guidance destination, that is, as the level of the warning for the user decreases. In this regard, examples of the users who are the guidance targets are livestock such as cows or sheep. An example of the destination is a stable.

In another example, the presentation system 1 may change the information presentation mode according to the level of the warning related to a user's posture. As a divergence between the user's posture and an ideal posture becomes greater, user's health is more likely to be harmed, and therefore the level of the warning increases. Hence, the control section 210 may perform control to increase the information presentation strength of the presentation section 310 as the divergence between the user's posture and the ideal posture becomes greater, that is, as the level of the warning for the user increases. On the other hand, the control section 210 may perform control to decrease the information presentation strength of the presentation section 310 as the divergence between the user's posture and the ideal posture becomes smaller, that is, as the level of the warning for the user decreases.

### -Level of Warning Related to Vital Sign

The level of the warning may relate to a vital sign. In this regard, the vital sign is information related to a body such as a heart rate, a blood pressure, breathing, and a body temperature.

In an example, the presentation system 1 may change the information presentation mode for the user who is a hospital personnel (or a caregiver) according to the level of the warning related to the vital sign of the hospital personnel (or a care-receiver). For example, the control section 210 may perform control to increase the information presentation strength of the presentation section 310 as the vital sign indicates worsening of a health state, that is, as the level of the warning for the user increases. On the other hand, the control section 210 may perform control to decrease the information presentation strength of the presentation section 310 as the vital sign indicates improvement of the health state, that is, as the level of the warning for the user decreases. According to this configuration, the user who is the hospital personnel can appropriately grasp a change of the health state of the hospital personnel.

In another example, the presentation system 1 may change the information presentation mode according to the level of the warning related to the vital sign of the user itself who is the hospital personnel (or the care-receiver). For example, the control section 210 may perform control to increase the information presentation strength of the presentation section 310 as the vital sign indicates worsening of the health state, that is, as the level of the warning for the user increases. On the other hand, the control section 210 may perform control to decrease the information presentation strength of the presentation section 310 as the vital sign indicates improvement of the health state, that is, as the level of the warning for the user decreases. According to this configuration, the user who is the hospital personnel can appropriately grasp a change of the health state that the user itself does not notice.

In another example, the presentation system 1 may change the information presentation mode for the user who is a caregiver according to the level of the warning related to the vital sign of an old person who is receiving a care at home. For example, the control section 210 may perform control to increase the information presentation strength of the presentation section 310 as the vital sign indicates worsening of the health state, that is, as the level of the warning for the user increases. On the other hand, the control section 210 may perform control to decrease the information presentation strength of the presentation section 310 as the vital sign indicates improvement of the health state, that is, as the level of the warning for the user decreases. According to this configuration, the user who is the caregiver can appropriately grasp the health state of the old person who is the care target. Consequently, it is possible to prevent in advance, for example, a situation that the old person suffers from heatstroke without no one's noticing the heatstroke at home.

In another example, the presentation system 1 may change the information presentation mode for the user who is a subordinate according to the warning level related to a vital sign of a user's boss. For example, the control section 210 may perform control to increase the information presentation strength of the presentation section 310 as the vital sign indicates worsening of a boss's mood, that is, as the level of the warning for the user increases. On the other hand, the control section 210 may perform control to decrease the information presentation strength of the presentation section 310 as the vital sign indicates improvement of the boss's mood, that is, as the level of the warning for the user decreases. In this regard, the vital sign that indicates whether the mood is good or bad is a voice or a complexion. In addition, the complexion can be identified based on a face image of the boss obtained by facial recognition.

### -Level of Warning Related to Ripeness

The level of the warning may relate to ripeness. The ripeness described herein refers to ripeness of a food.

In an example, the presentation system 1 may change the information presentation mode according to the warning level related to ripeness of a fruit. As a divergence between current ripeness and ideal ripeness of the fruit becomes smaller, the fruit is ripe enough to eat, and therefore the level of the warning is likely to increase to notify the user of that the fruit is ripe enough to eat. Hence, the control section 210 may perform control to increase the information presentation strength of the presentation section 310 as the divergence between the current ripeness and the ideal ripeness of the fruit becomes smaller, that is, as the level of the warning for the user increases. On the other hand, the control section 210 may perform control to decrease the information presentation strength of the presentation section 310 as the divergence between the current ripeness and the ideal ripeness of the fruit becomes greater, that is, as the level of the warning for the user decreases.

In another example, the presentation system 1 may change the information presentation mode according to the warning level related to ripeness of a vegetable in a refrigerator. As a degree that current ripeness of the vegetable exceeds ideal ripeness becomes greater, the vegetable goes worse, and therefore the level of the warning is likely to increase to notify the user of that the vegetable is going worse. Hence, the control section 210 may perform control to increase the information presentation strength of the presentation section 310 as the degree that the current ripeness of the vegetable exceeds the ideal ripeness becomes greater, that is, as the level of the warning for the user increases. On the other hand, the control section 210 may perform control to decrease the information presentation strength of the presentation section 310 as the degree that the current ripeness of the vegetable exceeds the ideal ripeness becomes smaller, that is, as the level of the warning for the user decreases.

In another example, the presentation system 1 may change the information presentation mode according to the warning level related to an expiration date of a food. As the number of days that pass from the expiration date becomes larger, a risk of eating the food increases, and therefore the level of the warning is likely to increase to notify the user that the expiration date has passed. Hence, the control section 210 may perform control to increase the information presentation strength of the presentation section 310 as the number of days that pass from the expiration date becomes larger, that is, as the level of the warning for the user increases. On the other hand, the control section 210 may perform control to decrease the information presentation strength of the presentation section 310 as the number of days that pass from the expiration date becomes smaller, that is, as the level of the warning for the user decreases.

### -Level of Warning Related to Bad Smell

In an example, the presentation system 1 may change the information presentation mode according to the warning level related to a bad smell. When the user searches for a source of the bad smell, the stronger bad smell indicates that the user is closer to the source of the bad smell, and therefore the level of the warning is likely to increase. Hence, the control section 210 may perform control to increase the information presentation strength of the presentation section 310 as the bad smell becomes stronger, that is, as the level of the warning for the user increases. On the other hand, the control section 210 may perform control to decrease the information presentation strength of the presentation section 310 as the bad smell becomes weaker, that is, as the level of the warning for the user decreases.

### -Level of Warning Related to Radiation Dose

In an example, the presentation system 1 may change the information presentation mode according to the warning level related to a radiation dose. A high radiation dose indicates harmfulness, and therefore the level of the warning is likely to increase. Hence, the control section 210 may perform control to increase the information presentation strength of the presentation section 310 as the radiation dose becomes higher, that is, as the level of the warning for the user increases. On the other hand, the control section 210 may perform control to decrease the information presentation strength of the presentation section 310 as the radiation dose becomes lower, that is, as the level of the warning for the user decreases.

### -Level of Warning Related to Time

The level of the warning may relate to a time.

In an example, the presentation system 1 may change the information presentation mode according to a remaining time from a current time to a time set to an alarm clock. As the remaining time from the current time to the time set to the alarm clock becomes shorter, therefore the level of the warning is more likely to increase. Hence, the control section 210 may perform control to increase the information presentation strength of the presentation section 310 as the remaining time becomes shorter, that is, as the level of the warning for the user increases. According to this configuration, it is possible to make a user's sleep state transition from non-REM sleep to REM sleep, and then wake up the user naturally.

In another example, the presentation system 1 may change the information presentation mode according to an elapsed time from start of a user's nap. For example, the control section 210 may control the vibration strength presented by the presentation section 310 to keep REM sleep.

### (3) Modified Example Related to Divergence Degree between Predetermined Route and User's Traveling Direction

The presentation system 1 may change the information presentation mode according to a divergence degree between a predetermined behavior and a user's behavior. That is, the predetermined fluctuation value may include the divergence degree between the predetermined behavior and the user's behavior. Furthermore, the control section 210 may change the information presentation mode of the presentation section 310 according to the divergence degree. In an example, as described in the above embodiment, the presentation system 1 may change the information presentation mode according to a divergence degree between a predetermined route and a user's traveling direction. Application examples will be described below.

### -Divergence Degree Related to Orientation

A divergence degree between a predetermined behavior and a user's behavior is a divergence degree related to an orientation.

In an example, when the user searches for a desired book at a terminal installed at a bookstore, the presentation system 1 may change the information presentation mode according to the divergence degree between a direction toward the desired book and a user's traveling direction. As, for example, the divergence degree between the direction toward the desired book and the user's traveling direction becomes smaller, the control section 210 may perform control to increase the information presentation strength of the presentation section 310. On the other hand, as the divergence degree between the direction toward the desired book and the user's traveling direction becomes greater, the control section 210 may perform control to decrease the information presentation strength of the presentation section 310. Instead of or together with the above, the presentation system 1 may change the information presentation mode according to the distance between the desired book and the user. According to this configuration, it is possible to guide the user to the desired book.

In another example, when the user is at a station or an airport, the presentation system 1 may change the information presentation mode according to the divergence degree between the direction toward the user's destination and the user's traveling direction. For example, the control section 210 may perform control to increase an information presentation strength (e.g., vibration strength) of the presentation section 310 as the divergence degree between the direction of the destination and the user's traveling direction becomes smaller. On the other hand, the control section 210 may perform control to decrease the information presentation strength of the presentation section 310 as the divergence degree between the direction of the destination and the user's traveling direction becomes greater.

In another example, when the user is doing a tag, the presentation system 1 may change the information presentation mode according to a divergence degree between a direction of it and the user's traveling direction. For example, the control section 210 may perform control to increase the information presentation strength of the presentation section 310 as the divergence degree between the direction of it and the user's traveling direction becomes smaller. On the other hand, the control section 210 may perform control to decrease the information presentation strength of the presentation section 310 as the divergence degree between the direction of it and the user's traveling direction becomes greater.

In another example, the presentation system 1 may change the information presentation mode according to the divergence degree between a direction indicated by a compass and the user's traveling direction. For example, the control section 210 may perform control to increase the information presentation strength of the presentation section 310 as the divergence degree between the direction indicated by the compass and the user's traveling direction becomes smaller. On the other hand, the control section 210 may perform control to decrease the information presentation strength of the presentation section 310 as the divergence degree between the direction indicated by the compass and the user's traveling direction becomes greater.

### -Divergence Degree Related to Position

A divergence degree between a predetermined behavior and a user's behavior may be a divergence degree related to a position.

In an example, when the user is on a train, the presentation system 1 may change the information presentation mode according to the divergence degree between a position of a scheduled destination station and a user's position, i.e., according to a distance to the scheduled destination station. For example, the control section 210 may perform control to increase an information presentation strength (e.g., a volume to be conducted via a bone) of the presentation section 310 as the distance to the scheduled destination station becomes shorter. On the other hand, the control section 210 may perform control to decrease the information presentation strength of the presentation section 310 as the distance to the scheduled destination station becomes longer.

In another example, when the user searches for a lighting switch fumbling in the dark, the presentation system 1 may change the information presentation mode according to a divergence degree between a position of a switch and a position of a user's finger, that is, according to a distance to the switch. For example, the control section 210 may perform control to increase the information presentation strength of the presentation section 310 as the distance to the switch becomes shorter. On the other hand, the control section 210 may perform control to decrease the information presentation strength of the presentation section 310 as the distance to the switch becomes longer.

### -Divergence Degree Related to Leisure

A divergence degree between a predetermined behavior and a user's behavior may be a divergence degree related to a leisure.

In an example, when the user is playing golf, the presentation system 1 may change the information presentation mode according to a divergence degree between a target distance and a flying distance that is predicted based on a size of a swing during user's practice swing. For example, the control section 210 may perform control to increase the information presentation strength of the presentation section 310 as the divergence degree between the target distance and the predicted flying distance becomes smaller. On the other hand, the control section 210 may perform control to decrease the information presentation strength of the presentation section 310 as the divergence degree between the target distance and the predicted flying distance becomes greater.

In an example, when the user sings karaoke, the presentation system 1 may change the information presentation mode according to a divergence degree between an optimal singing voice inflection and an optimal singing voice volume, and a user's singing voice inflection and a user's singing voice volume. For example, the control section 210 may perform control to increase the information presentation strength of the presentation section 310 as the divergence degree between the optimal singing voice inflection and the optimal singing voice volume, and the user's singing voice inflection and the user's singing voice volume becomes smaller. On the other hand, the control section 210 may perform control to decrease the information presentation strength of the presentation section 310 as the divergence degree between the optimal singing voice inflection and the optimal singing voice volume, and the user's singing voice inflection and the user's singing voice volume becomes greater.

In another example, when the user is playing archery, the presentation system 1 may change the information presentation mode according to a divergence degree between a target center and a landing position predicted from a user's posture of drawing a bow. For example, the control section 210 may perform control to increase the information presentation strength of the presentation section 310 as the divergence degree between the target center and the predicted landing position becomes smaller. On the other hand, the control section 210 may perform control to decrease the information presentation strength of the presentation section 310 as the divergence degree between the target center and the predicted landing position becomes greater.

In another example, when the user is fishing, the presentation system 1 may change the information presentation mode according to a divergence degree between a direction of a school of fish detected by a fishfinder and a direction of a user's face. For example, the control section 210 may perform control to increase the information presentation strength of the presentation section 310 as the divergence degree between the direction of the school of fish and the direction of the user's face becomes smaller. On the other hand, the control section 210 may perform control to decrease the information presentation strength of the presentation section 310 as the divergence degree between the direction of the school of fish and the direction of the user's face becomes greater.

### -Divergence Degree Related to Limit

A divergence degree between a predetermined behavior and a user's behavior may be a divergence degree related to a limit.

In an example, when the user performs thread fastening, the presentation system 1 may change the information presentation mode according to a divergence degree between a fastening limit point and a current fastening degree. As the divergence degree between the thread fastening limit point and the current fastening degree becomes smaller, it is concerned that a screw hole is close to a limit and is damaged more. Hence, the control section 210 may perform control to increase the information presentation strength of the presentation section 310 as the divergence degree between the thread fastening limit point and the current fastening degree becomes smaller. On the other hand, the control section 210 may perform control to decrease the information presentation strength of the presentation section 310 as the divergence degree between the thread fastening limit point and the current fastening degree becomes greater.

In another example, when the user is typing on a keyboard, the presentation system 1 may change the information presentation mode according to a divergence degree between a limit point of a typing strength and a user's typing strength. As the divergence degree between the limit point of the typing strength and the user's typing strength becomes smaller, it is concerned that the keyboard is damaged more. Hence, the control section 210 may perform control to increase the information presentation strength of the presentation section 310 as the divergence degree between the limit point of the typing strength and the user's typing strength becomes smaller. On the other hand, the control section 210 may perform control to decrease the information presentation strength of the presentation section 310 as the divergence degree between the limit point of the typing strength and the user's typing strength becomes greater.

In another example, when the user talks indoor, the presentation system 1 may change the information presentation mode according to a divergence degree between a limit point of a voice volume that is permitted indoor and a user's voice volume. As the divergence degree between the limit point of the voice volume and the user's voice volume becomes smaller, it is concerned that the user's voice leaks to another room and causes a problem more. Hence, the control section 210 may perform control to increase the information presentation strength of the presentation section 310 as the divergence degree between the limit point of the voice volume and the user's voice volume becomes smaller. On the other hand, the control section 210 may perform control to decrease the information presentation strength of the presentation section 310 as the divergence degree between the limit point of the voice volume and the user's voice volume becomes greater.

### (4) Presentation of Beneficial Information

As described in the above embodiment, the control device 20 includes the control section 210 that controls information presentation of the presentation section 310. The control section 210 may cause the presentation section 310 to present beneficial information that is information that is beneficial for the user as the above information while or instead of performing control described in the above embodiment. Furthermore, when predetermined conditions are satisfied, the control section 210 may cause the presentation section 310 to present the above information.

In this regard, the above predetermined conditions may be, for example, a change of a relative physical quantity with respect to a target associated with the beneficial information. The above physical quantity is, for example, a relative distance with respect to the above target.

Furthermore, the above predetermined conditions may be, for example, a case where the user can perceive the target associated with the beneficial information. In a case where, for example, the target associated with the beneficial information can be visually perceived, the control section 210 may cause the presentation section 310 to present the beneficial information when the user can visually check the target. The above target includes various objects. Furthermore, the target associated with the beneficial information is not limited to objects, and may be a phenomenon that can be perceived via other than the sense of vision. The target may be, for example, a siren of an emergency vehicle. In this case, the beneficial information is a presence of an ambulance vehicle, and, furthermore, the target associated with the beneficial information may be a siren output by the ambulance vehicle or light of a warning lamp. Furthermore, a case where the user is able to perceive an object is a case where a state where a predetermined metal state of a person is specified is satisfied. When, for example, a driver is in a relaxed state, the control section 210 may regard that the user can perceive a target.

Furthermore, the beneficial information may be, for example, information whose broadcasting in a case where the information becomes available for the user is explicitly instructed by the user. On the other hand, the beneficial information may be information that is assumed to be beneficial for the user among pieces of information collected without a user's instruction.

### -Application Example of Predetermined Conditions Related to Change of Relative Distance

The application example of the presentation system 1 regarding the predetermined conditions related to a change of a relative distance with respect to a target associated with beneficial information will be described below.

For example, the presentation system 1 may use an approach to an ice cream shop as the predetermined conditions. Furthermore, the presentation system 1 may present the presence of the ice cream shop as the beneficial information. In this case, when the detection section 110 detects that a relative distance between the ice cream shop that is the target associated with the beneficial information and the user becomes a predetermined value or less, the control section 210 may control the presentation device 30 to present vibration as the beneficial information.

For example, the presentation system 1 may use an approach to a shop that is introduced by a TV program as the predetermined conditions. Furthermore, the presentation system 1 may present the presence of the shop as the beneficial information. In this case, when the detection section 110 detects that a relative distance between the shop that is the target associated with the beneficial information and the user becomes a predetermined value or less, the control section 210 may control the presentation device 30 to present the beneficial information.

For example, the presentation system 1 may use that a user's child has moved away from the user's side as the predetermined conditions. Furthermore, the presentation system 1 may present that the user's child has moved away from the user's side as the beneficial information. In this case, when the detection section 110 detects that a relative distance between the child who is the target associated with the beneficial information and the user becomes a predetermined value or more, the control section 210 may control the presentation device 30 to present the beneficial information.

For example, the presentation system 1 may use that a rain cloud and a thundercloud have approached as the predetermined conditions. Furthermore, the presentation system 1 may present that the rain cloud and the thundercloud have approached and it is raining outside as the beneficial information. In this case, when the detection section 110 detects that a relative distance between the rain cloud and the thundercloud that are the targets associated with the beneficial information and the user becomes a predetermined value or less, the control section 210 may control the presentation device 30 to present the beneficial information.

For example, the presentation system 1 may use that a creature that the user dislikes has approached as the predetermined conditions. An example of such a creature is a mosquito. Furthermore, the presentation system 1 may use that the creature that the user dislikes has approached as the beneficial information. In this case, when the detection section 110 detects that a relative distance between the creature that is the target associated with the beneficial information and the user dislikes, and the user becomes a predetermined value or less, the control section 210 may control the presentation device 30 to present the beneficial information.

For example, the presentation system 1 may use an approach to a place of a high radiation dose as the predetermined conditions. Furthermore, the presentation system 1 may present the approach to the place of the high radiation dose as the beneficial information. In this case, when the detection section 110 detects that a relative distance between the place of the high radiation dose that is the target associated with the beneficial information and the user becomes a predetermined value or less, the control section 210 may control the presentation device 30 to present the beneficial information.

For example, the presentation system 1 may use that, when the user is on a train, the user has approached a user's destination station as the predetermined conditions. Furthermore, the presentation system 1 may present that the user has approached the user's destination station as the beneficial information. In this case, when the detection section 110 detects that a relative distance between the user's destination station that is the target associated with the beneficial information and the user becomes a predetermined value or less, the control section 210 may control the presentation device 30 to present vibration as the beneficial information. In this case, vibration is desirably presented.

For example, the presentation system 1 may use that specific other people registered in advance have approached the presentation system 1 as the predetermined conditions. Examples of the specific other people are user's family members and user's friends. Furthermore, the presentation system 1 may use that the specific other person has approached as the beneficial information. In this case, when the detection section 110 detects that a relative distance between the specific other person who is the target associated with the beneficial information and the user becomes a predetermined value or less, the control section 210 may control the presentation device 30 to present the beneficial information.

For example, the presentation system 1 may use that the user has approached a previously lost stuff as the predetermined conditions. Furthermore, the presentation system 1 may present that the user has approached the previously lost stuff as the beneficial information. In this case, when the detection section 110 detects that a relative distance between the stuff that is the target associated with the beneficial information and the user has previously lost, and the user becomes a predetermined value or less, the control section 210 may control the presentation device 30 to present the beneficial information.

For example, the presentation system 1 may use that the user has approached a user's seat in a concert hall as the predetermined conditions. Furthermore, the presentation system 1 may present that the user has approached the user's seat as the beneficial information. In this case, when the detection section 110 detects that a relative distance between the user's seat that is the target associated with the beneficial information and the user becomes a predetermined value or less, the control section 210 may control the presentation device 30 to present the beneficial information.

### -Another Example of Beneficial Information

An example of contents of the beneficial information will be described below. The beneficial information may include at least one of various pieces of information described below.

### -Information Related to Health of Body and Mind

The beneficial information may include information related to health of bodies and minds of the user and other people related to the user. Examples of the other people are user's family members and user's friends.

In an example, when the user borrows a large amount of money from a friend for a long period of time, the presentation system 1 may present information that indicates that a psychological distance between the user and the friend has become distant as the beneficial information. That psychological distance between the user and the friend has become distant can be detected when, for example, the borrowed money exceeds a predetermine value, and/or when the borrowing period exceeds a predetermined value.

In another example, when the user opens a parasol, the presentation system 1 may present information that indicates that an ultraviolet radiation dose is at a harmful level and recommends to not close the parasol as the beneficial information.

In another example, when the user has an allergy, the presentation system 1 may present information that warns that the user should not eat by mistake a food that is likely to cause an allergic reaction as the beneficial information. Whether or not the food is likely to cause the allergic reaction can be detected based on, for example, raw material information recorded in a tag attached to the food.

In another example, the presentation system 1 may present information that warns that an expiration date of a food expires as the beneficial information. By, for example, communicating with a register system of a store when the user purchases the food, the presentation system 1 can automatically register and use information of the expiration date of the food to present the beneficial information.

In another example, the presentation system 1 may present information that warns that the user eats too much or drinks too much as the beneficial information.

In another example, the presentation system 1 may present information that warns that a user's daily calorie intake is about to exceed a predetermined value as the beneficial information.

In another example, the presentation system 1 may present information that warns that a user's posture has worsened as the beneficial information. Such information can be presented at a part (e.g., back) of a body related to the worsened posture as, for example, vibration that is uncomfortable for the user.

In another example, the presentation system 1 may present information that warns that a size of user's child's foot does not fit a shoe size anymore and recommends to buy user's child's shoes as the beneficial information. That the size of the user's child's foot does not fit the shoe size anymore can be estimated based on, for example, a statistically indicated growth curve of a general child's foot size.

In another example, the presentation system 1 may present information that indicates that a time to have a vaccination has arrived as the beneficial information.

### -Information Related to Physiological Phenomenon

The beneficial information may include information related to physiological phenomena of the user and other people related to the user. Examples of the other people are user's family members and user's friends.

In an example, the presentation system 1 may present that a wife's labor pain is coming as the beneficial information to a husband who is the user. For example, an electrical simulation that causes a pain similar to the labor pain may be presented as the beneficial information.

In another example, the presentation system 1 may present that a user's child has a desire to urinate as the beneficial information. That the child has the desire to urinate can be estimated based on, for example, a child's water intake amount, a child's sweating amount, and a temperature.

In another example, the presentation system 1 may present that a user's child's milk tooth is about to come out as the beneficial information. That the child's milk tooth is about to come out can be estimated based on, for example, an average timing that is statistically indicated and at which milk teeth come out.

### -Information Related to Imminent Danger

The beneficial information may include information related to imminent dangers that come to the user and other people related to the user. Examples of the other people are user's family members and user's friends.

In an example, when an earthquake occurs, the presentation system 1 may present information related to the earthquake such as a place of an epicenter, a distance from the epicenter to the user, and a magnitude of the earthquake as the beneficial information. The presentation system 1 may present as a vibration stimulation a vibration stimulation whose level corresponds to the level of the magnitude of the earthquake.

In another example, the presentation system 1 may present that a vehicle driven by the user has entered a school area of an elementary school as the beneficial information.

In another example, the presentation system 1 may present information that warns that a vehicle driven by the user is about to contact objects in surroundings as the beneficial information. For example, the presentation system 1 may obtain distances to the objects in the surroundings by using a sonar provided to the vehicle, and present the beneficial information as the vibration stimulation when the distances to the objects in the surroundings become a predetermined value or less.

In another example, when a child takes a behavior that is likely to injure the child, the presentation system 1 may perform, for the child, tactile presentation for suppressing the child's behaviors. Examples of behaviors that are likely injure the child include rushing out to a road and jumping off from a high place. An example of tactile presentation for suppressing the child's behaviors is to tighten a band wrapped around, for example, a child's wrist.

In another example, the presentation system 1 may present information that warns an approach to an object of a high temperature that causes a burn upon touch as the beneficial information. Such beneficial information is desirably presented in a mode such as a sharp vibration stimulation or a sharp electrical stimulation that can issue a warning.

In another example, the presentation system 1 may present information that warns that a suspicious person is approaching the user as the beneficial information.

In another example, the presentation system 1 may present information that warns that a speed of a vehicle driven by the user has exceeded the legal speed as the beneficial information.

### -Information Related to Property

The beneficial information may include information related to properties of the user and other people related to the user. Examples of the other people are user's family members and user's friends.

In an example, the presentation system 1 may present that a balance of a prepaid card has become small as the beneficial information.

In another example, when the user is doing shopping, the presentation system 1 may present that a total price of goods in a shopping basket exceeds a budget as the beneficial information.

In another example, the presentation system 1 may present that a deposit balance is about to go below a withdrawal amount as the beneficial information. By, for example, predicting the withdrawal amount based on a use history of a credit card and comparing the withdrawal amount and the deposit balance, the presentation system 1 can detect that the balance deposit is about to go below the withdrawal amount.

### -Information Related to Behavior Schedule

The beneficial information may include information related to behavior schedules of the user and other people related to the user. Examples of the other people are user's family members and user's friends.

In an example, when the user has a reservation of a train, the presentation system 1 may present that a time to get on the reserved train has come as the beneficial information.

### -Information Related to Possessed Device

The beneficial information may include information related to devices possessed by the user and other people related to the user. Examples of the other people are user's family members and user's friends.

In an example, the presentation system 1 may present that wireless connection via Wi-Fi (registered trademark) of a smartphone possessed by the user is about to be disconnected as the beneficial information.

The various modified examples have been described above.

Furthermore, the effect disclosed in this description is only explanatory or exemplary. That is, the technology according to the present disclosure exerts other effects that are obvious for one of ordinary skill in the art from the disclosure of this description together with the above effect or instead of the above effect.

Furthermore, it is possible to create a program, too, that causes hardware such as a CPU, an ROM, and an RAM built in a computer to exhibit functions equivalent to functions of the control device 20, and provide a non-transitory computer readable storage medium in which the program is recorded.

### Reference Signs List

- 1: presentation system
- 10: detection device
- 110: detection section
- 20: control device
- 210: control section
- 30: presentation device
- 310: presentation section

## Claims

1. A control device comprising:
a control section configured to control information presentation of a presentation section configured to present information,
wherein the control section changes a mode of the information presentation of the presentation section according to a predetermined fluctuation value that can fluctuate.

2. The control device according to claim 1, wherein
the predetermined fluctuation value includes a relative physical quantity with respect to a target, and
the control section changes the mode of the information presentation of the presentation section according to the relative physical quantity.

3. The control device according to claim 2,
wherein the relative physical quantity includes a distance.

4. The control device according to claim 2,
wherein the relative physical quantity includes a speed.

5. The control device according to claim 1, wherein
the predetermined fluctuation value includes a level of a warning for a user, and
the control section changes the mode of the information presentation of the presentation section according to the level of the warning.

6. The control device according to any one of claims 1 to 3, wherein
the predetermined fluctuation value includes a divergence degree between a predetermined behavior and a behavior of a user, and
the control section changes the mode of the information presentation of the presentation section according to the divergence degree.

7. The control device according to claim 6, wherein
the divergence degree between the predetermined behavior and the behavior of the user includes a divergence degree between a predetermined route and a traveling direction of the user, and
the control section changes the mode of the information presentation of the presentation section according to the divergence degree.

8. A presentation system comprising:
a presentation section configured to perform information presentation for a user; and
a control section configured to control the information presentation of the presentation section,
wherein the control section changes a mode of the information presentation of the presentation section according to a predetermined fluctuation value that can fluctuate.
